# EUROPÄISCHE PATENTANMELDUNG

(11) **EP 3 413 384 A1**
(43) Veröffentlichungstag der Anmeldung: **12.12.2018**
(21) Anmeldenummer: 17275084.6
(22) Anmeldetag: 09.06.2017
(51) Int. Cl.: H01M 8/18

(54) **REDOX-FLOW-BATTERIE UND VERFAHREN ZUM BETREIBEN EINER REDOX-FLOW-BATTERIE**

(71) Anmelder: Siemens Aktiengesellschaft, 80333 München (DE)
(72) Erfinder: FLECK, Robert, 91325 Adelsdorf (DE); FRIEDL, Jochen, Newcastle Upon Tyne, NE3 3NJ (GB); SCHRICKER, Barbara, 91058 Erlangen (DE); WOLFSCHMIDT, Holger, 91058 Erlangen (DE)

(57) **Zusammenfassung**

Die Erfindung betrifft eine wiederaufladbare Redox-Flow-Batterie und ein Verfahren zum Betreiben einer elektrisch wiederaufladbaren Redox-Flow-Batterie. Zunächst wird eine Redox-Flow-Batterie umfassend eine erste und zweite Kammer, getrennt durch eine Membran, wobei die erste Kammer eine Kathode und die zweite Kammer eine Anode umfasst, bereitgestellt. Ein erster Elektrolyt wird als Katholyt in die erste Kammer geführt und ein zweiter Elektrolyt wird als Anolyt in die zweite Kammer geführt, wobei der erste und/oder zweite Elektrolyt ein Reduktions-Oxidations-Paar umfasst, und wobei die Oxidationszahl des Reduktions-Oxidations-Paares durch Zugabe einer ersten Komponente zum ersten und/oder zweiten Elektrolyt verändert wird und/oder die Oxidationszahl elektrochemisch verändert wird.

## Beschreibung

Die Erfindung betrifft eine Redox-Flow-Batterie und ein Verfahren zum Betreiben einer Redox-Flow-Batterie.

Die Nachfrage nach Strom schwankt im tageszeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Batterien sind Speicher für elektrische Energie auf elektrochemischer Basis und geeignet, die überschüssige Energie zu speichern. Handelt es sich um einen wiederaufladbaren Speicher wird dieser auch Akkumulator genannt. Ein einzelnes wiederaufladbares Speicherelement wird auch Sekundärelement genannt.

Bei Redox-Flow-Batterien ist, im Unterschied zu klassischen Sekundärelementen, das elektrodenaktive Material flüssig. Dieser flüssige Elektrolyt wird in einem Tank gelagert und in einen Kathodenraum mit einer Kathode und/oder in einen Anodenraum mit einer Anode gepumpt. An den Elektroden wird das elektrodenaktive Material reduziert oder oxidiert. Der flüssige Elektrolyt umfasst als elektrodenaktives Material daher zweckmäßigerweise ein Reduktions-Oxidations-Paar.

Der Elektrolyt umfasst insbesondere Oxide von Übergangsmetallen als Reduktions-Oxidations-Paar. Nachteilig kann das Reduktions-Oxidations-Paar zu Beginn der chemischen Reaktion in dem falschen, also dem entgegengesetzten, Reduktions- oder Oxidationsstatus vorliegen. Weiterhin kann durch ungewollte Verschiebung der Oxidationsstufen während des Betriebs der Redox-Flow-Batterie aufgrund unerwünschter Nebenreaktionen die nutzbare Kapazität nachteilig während des Betriebs sinken.

Es ist daher Aufgabe der Erfindung ein Verfahren zum Betreiben einer Redox-Flow-Batterie und eine Redox-Flow-Batterie anzugeben, welche das Einstellen des Reduktions- oder Oxidationsstatus des Reduktions-Oxidations-Paars zu Beginn oder während des Betriebs der Redox-Flow-Batterie ermöglichen.

Die Aufgabe wird mit einem Verfahren gemäß Anspruch 1 und einer Redox-Flow-Batterie gemäß Anspruch 14 gelöst.

Das Verfahren zum Betreiben einer elektrisch wiederaufladbaren Redox-Flow-Batterie umfasst mehrere Schritte. Es erfolgt das Bereitstellen einer Redox-Flow-Batterie umfassend eine erste und eine zweite Kammer getrennt durch eine Membran, wobei die erste Kammer eine Kathode und die zweite Kammer eine Anode umfasst. Ein erster Elektrolyt wird als Katholyt in die erste Kammer geführt und ein zweiter Elektrolyt wird als Anolyt in die zweite Kammer geführt, wobei der erste und/oder zweite Elektrolyt ein Reduktions-Oxidations-Paar umfasst. Die Oxidationszahl des Reduktions-Oxidations-Paares wird durch Zugabe einer ersten Komponente zum ersten und/oder zweiten Elektrolyt verändert und/oder die Oxidationszahl des Reduktions-Oxidations-Paares wird elektrochemisch verändert.

Eine erfindungsgemäße elektrisch wiederaufladbare Redox-Flow-Batterie zum Durchführen des oben genannten Verfahrens umfasst eine erste und eine zweite Kammer, getrennt durch eine Membran, wobei die erste Kammer eine Kathode und die zweite Kammer eine Anode umfasst, und wobei die erste Kammer geeignet ist, einen Elektrolyten als Katholyt aufzunehmen und die zweite Kammer geeignet ist, den Elektrolyten als Anolyt aufzunehmen, wobei der Elektrolyt ein Reduktions-Oxidations-Paar umfasst. Die Redox-Flow-Batterie umfasst weiterhin eine erste Pumpe zum Pumpen des Katholyts durch die erste Kammer und eine zweite Pumpe zum Pumpen des Anolyts durch die zweite Kammer. Weiterhin umfasst die Redox-Flow-Batterie eine Zuführvorrichtung geeignet zum Zuführen einer ersten Komponente in die erste und/oder zweite Kammer. Besonders vorteilhaft ist diese Zuführung an einem Einlass für die Elektrolyten angeordnet.

Das erfindungsgemäße Verfahren und die erfindungsgemäße Vorrichtung ermöglichen es vorteilhaft zu Beginn des Betriebs der wiederaufladbaren Redox-Flow-Batterie oder während des Betriebs der wiederaufladbaren Redox-Flow-Batterie die Oxidationszahl zu verändern. Insbesondere ermöglicht es, ein Reduktions-Oxidations-Paar in dem Elektrolyten vor Betrieb zu aktivieren, während eines Betriebs zu reaktivieren oder zu deaktivieren.

Aktivieren und Reaktivieren ist insbesondere für das Polyoxometallat PV14040 möglich. Dieses Polyoxometallat lässt sich mittels Hydrazin als Reduktionsmittel reduzieren und somit aktivieren oder, falls die Redox-Flow-Batterie bereits betrieben wird, reaktivieren. Die Hydrazinzugabe kann also vor oder während des Betriebes der Redox-Flow-Batterie erfolgen.

In einer vorteilhaften Ausgestaltung und Weiterbildung der Erfindung umfasst der erste Elektrolyt ein erstes Reduktions-Oxidations-Paar und der zweite Elektrolyt ein zweites Reduktions-Oxidations-Paar. Besonders vorteilhaft wird als das erste und/oder zweite Reduktions-Oxidations-Paar ein Polyoxometallat verwendet. Vorteilhaft kann die chemische Struktur der Polyoxometallate an bestimmte Anwendungsziele eine Redox-Flow-Batterie angepasst werden. Insbesondere sind Polyoxometallate mit einer schnellen Reaktionskinetik und mehreren möglichen Elektronenübergängen für den Einsatz in Redox-Flow-Batterien vorteilhaft geeignet.

In einer weiteren vorteilhaften Ausgestaltung und Weiterbildung der Erfindung wird die Oxidationszahl des ersten und/oder zweiten Reduktions-Oxidations-Paars verringert. Insbesondere wird die Oxidationszahl des Polyoxometallats verringert. Vorteilhaft ist es mit dem erfindungsgemäßen Verfahren möglich, das Polyoxometallat durch Zugabe eines Reduktionsmittels oder durch eine elektrochemische Reduktion in einen aktiven Zustand zu überführen, sodass das Polyoxometallat als Reduktions-Oxidations-Paar in der ersten und/oder zweiten Kammer der Redox-Flow-Batterie vorliegt. Insbesondere kann Tetradecavanadophosphat [PV(V)₁₄O₄₂]⁹⁻, wobei das Vanadium die Oxidationszahl fünf (V) aufweist, was in der Klammer der Formel verdeutlicht wird, aus diesem oxidierten Zustand reduziert werden hin zu H₆[PV(V)₈V(IV)₆O₄₂]⁹⁻, wobei 6 von 14 der insgesamt vorkommenden Vanadiumatomen in dieser Verbindung die Oxidationszahl vier (IV) aufweist.

In einer besonders vorteilhaften Ausgestaltung und Weiterbildung der Erfindung wird als erste Komponente zum Verringern der Oxidationszahl des ersten und/oder zweiten Reduktions-Oxidations-Paares Hydrazin, ein Alkalimetall, ein Hydrid, ein Aldehyd, Natriumsulfit, Natriumdithionit oder Natriumthiosulfat verwendet. Insbesondere Hydrazin ist ein starkes Reduktionsmittel und somit vorteilhaft effektiv beim Aktivieren der Reduktions-Oxidations-Paare.

In einer weiteren vorteilhaften Ausgestaltung und Weiterbildung der Erfindung wird die Oxidationszahl des ersten und/oder zweiten Reduktions-Oxidations-Paares vergrößert. Insbesondere werden als Oxidationsmittel Wasserstoffperoxid Permanganat, Sauerstoff, Halogene oder Edelmetallionen verwendet.

Insbesondere wenn bei Betriebsbeginn der Redox-Flow-Batterie neutrale Reduktions-Oxidationspaare vorliegen, ist es vorteilhaft eine Hälfte der Reduktions-Oxidationspaare zu oxidieren. Diese werden dann dem Kathodenraum, also der ersten Kammer zugeführt, um dort wiederum reduziert zu werden. Die zweite Hälfte wird reduziert. Diese Hälfte wird der zweiten Kammer, also dem Anodenraum, zugeführt und dort oxidiert. Das Reduzieren oder Oxidieren kann vor Betriebsbeginn vorteilhaft in den Vorlagetanks erfolgen. Während des laufenden Betriebs ist ebenso eine Zugabe direkt in die erste oder zweite Kammer sinnvoll.

In einer weiteren vorteilhaften Ausgestaltung und Weiterbildung der Erfindung erfolgt die Zugabe der ersten Komponente zur Reaktivierung der Batterie im entladenen Zustand der Redox-Flow-Batterie. Die Zugabe der ersten Komponente kann in jedem Zustand der Batterie, von vollgeladen bis leer, erfolgen. Besonders vorteilhaft ist aber die Zugabe der ersten Komponente im leeren Zustand, da dann vorteilhaft die zuzugebende Menge der ersten Komponente genau ermittelt werden kann und deren Zugabe somit besonders effektiv erfolgt.

In einer weiteren vorteilhaften Ausgestaltung und Weiterbildung der Erfindung wird für die Reaktivierung der Batterie eine Restkapazität der Redox-Flow-Batterie gemessen und eine erste Menge der ersten Komponente in Relation zu der gemessenen Restkapazität hinzugegeben. Als Restkapazität wird die zu einem bestimmten Zeitpunkt verbleibende nutzbare Kapazität bezeichnet. Vorteilhaft ist es möglich, 50-100 % der theoretisch nutzbaren Speicherkapazität der Redox-Flow-Batterie auf diesem Weg zu aktivieren. Die erste Menge der ersten Komponente, die hinzugegeben wird, wird in einem Anteil der theoretisch nutzbaren Speicherkapazität der Redox-Flow-Batterie bestimmt. Insbesondere kann dieser Anteil als prozentualer Anteil angegeben werden.

In einer weiteren vorteilhaften Weiterbildung und Ausgestaltung der Erfindung erfolgt die Veränderung der Oxidationszahl des Reduktions-Oxidations-Paares elektrochemisch mittels einer ersten Aktivierungselektrode in der ersten Kammer und/oder mittels einer zweiten Aktivierungselektrode in der zweiten Kammer. Vorteilhaft bilden diese Aktivierungselektroden ein Elektrodenpaar. Es ist ebenso denkbar, dass als Aktivierungselektroden die Anode und Kathode der ersten und zweiten Kammer verwendet werden. Dabei muss zweckmäßigerweise die Stabilität der Elektroden bei der anzulegenden Spannung für die elektrochemische Reduktion oder Oxidation beachtet werden. Sind die Anode und die Kathode bei der angelegten Spannung stabil, so ist es vorteilhaft diese einzusetzen, da dann der Einsatz eines zweiten Elektrodenpaares vermieden wird.

In einer weiteren vorteilhaften Ausgestaltung und Weiterbildung der Erfindung erfolgt die elektrochemisch bewirkte Veränderung der Oxidationszahl des Reduktions-Oxidations-Paares mittels Katalysatoren an der ersten und/oder zweiten Aktivierungselektrode.

In einer weiteren vorteilhaften Ausgestaltung und Weiterbildung der Erfindung erfolgt die elektrochemisch bewirkte Veränderung der Oxidationszahl des Reduktions-Oxidations-Paares mittels Additiven an der ersten und/oder zweiten Aktivierungselektrode. Die Additive befinden sich insbesondere an den Elektroden und im gesamten Elektrolyten. Sie können sich insbesondere auch von der Elektrode lösen und anschließend verbraucht werden.

In einer weiteren vorteilhaften Ausgestaltung und Weiterbildung der Erfindung werden die erste und/oder zweite Aktivierungselektrode mit einer Spannung in Abhängigkeit der Restkapazität der Redox-Flow-Batterie beaufschlagt. Die Steuerung der Reaktion der Redox-Flow-Batterie wird somit vorteilhaft möglich. Weiterhin können vorteilhaft Über- oder Unterspannungen vermieden werden.

In einer vorteilhaften Ausgestaltung und Weiterbildung der Erfindung umfasst die erste Kammer eine erste Aktivierungselektrode und die zweite Kammer eine zweite Aktivierungselektrode. Die erste und zweite Aktivierungselektrode sind geeignet, eine elektrochemische Veränderung des Reduktions-Oxidations-Paares zu bewirken.

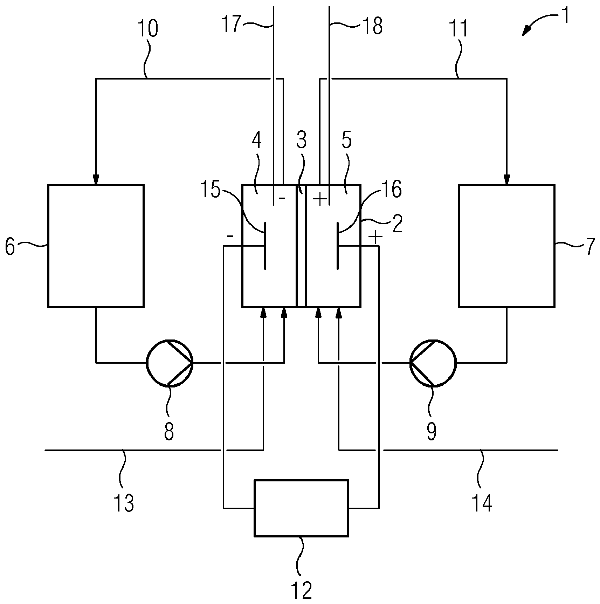

Weitere Merkmale, Eigenschaften und Vorteile der vorliegenden Erfindung ergeben sich aus der nachfolgenden Beschreibung unter Bezugnahme der beiliegenden Figur.

Die Figur zeigt eine wiederaufladbare Redox-Flow-Batterie mit einer Zugabevorrichtung für eine erste Komponente.

Die Figur zeigt eine wiederaufladbare Redox-Flow-Batterie 1. Die wiederaufladbare Redox-Flow-Batterie umfasst eine Redox-Flow-Einheit 2. Die Redox-Flow-Einheit 2 umfasst eine Membran 3, wobei die Membran 3 eine erste Kammer 4 und eine zweite Kammer 5 voneinander trennt. In der ersten Kammer 4 ist eine Kathode 15 angeordnet. In der zweiten Kammer 5 ist eine Anode 16 angeordnet. Die Kathode 15 und die Anode 16 sind über eine Elektroenergieanbindung 12 mit einem Stromnetz verbunden. Die erste Kammer 4 umfasst weiterhin eine erste Aktivierungselektrode 17. Die zweite Kammer 5 umfasst eine zweite Aktivierungselektrode 18.

Die erste Kammer 4 und die zweite Kammer 5 sind geeignet, einen Elektrolyt aufzunehmen. In diesem Beispiel liegt in der ersten Kammer 4 ein erster Elektrolyt 10 vor. In der zweiten Kammer 5 liegt ein zweiter Elektrolyt 11 vor. Der erste Elektrolyt wird mittels der ersten Pumpe 8 und der zweite Elektrolyt 11 mittels der zweiten Pumpe 9 in die Redox-Flow-Einheit 2 gepumpt. Aus der Redox-Flow-Einheit 2 wird der Elektrolyt 10, 11 anschließend zurück in die Tanks geführt. Der Elektrolyt wird in einem ersten Tank 6 und einen zweiten Tank 7 vorgelegt. In diesem Beispiel umfasst der erste Elektrolyt 10 und der zweite Elektrolyt 11 ein Polyoxymetallat. Das Polyoxymetallat liegt zu Beginn des Betriebes in einer nicht aktiven Form vor.

In diesem Beispiel wird als Polyoxometallat in der ersten Kammer, also dem Kathodenraum, das Tetradecavanadophosphat [PV(V)₁₄O₄₂]⁹⁻ (abgekürzt: PV14) in oxidierter Form verwendet.

Durch zugeben einer ersten Komponente durch Zuleitung 13 und Zuleitung 14 wird das Polyoxymetallat in eine aktive Form das bedeutet in diesem Beispiel in die reduzierte Form H₆[PV(V)₈V(IV)₆O₄₂]⁹⁻ überführt. Es ist auch möglich, dass die erste Komponente während des Betriebs zum Reaktivieren des Polyoxymetallat zugegeben wird. Insbesondere wird die erste Komponente, insbesondere Hydrazin, in Abhängigkeit einer Restkapazität der Redox-Flow-Einheit 2 hinzu geführt. Insbesondere liegt die Restkapazität in einem Bereich zwischen 60& bis 90%, wenn die erste Komponente Hydrazin hinzugegeben wird. Alternativ oder zusätzlich zu einer Zugabe einer ersten Komponente, insbesondere von Hydrazin, kann die Aktivierung insbesondere des Polyoxymetallats, auch elektrochemisch erfolgen. Es ist dabei möglich, dass die erste Aktivierungselektrode 17 und die zweite Aktivierungselektrode 18 das Polyoxymetallat von der nicht aktiven in die aktive Form umwandeln. Dieses Umwandeln kann durch Additive und Katalysatoren beschleunigt werden. Vorteilhaft ist es so möglich, Polyoxymetallat als Reduktions-Oxidations-Paar in Redox-Flow-Batterien einzusetzen und in Abhängigkeit des Betriebsmodus zu aktivieren und reaktivieren.

## Patentansprüche

1. Verfahren zum Betreiben einer elektrisch wiederaufladbaren Redox-Flow-Batterie (1) mit folgenden Schritten:
- Bereitstellen einer Redox-Flow-Batterie (1) umfassend eine erste und zweite Kammer (4, 5), getrennt durch eine Membran (3), wobei die erste Kammer (4) eine Kathode (15) und die zweite Kammer (5) eine Anode (16) umfasst,
- Führen eines ersten Elektrolyten (10) als Katholyt in die erste Kammer (4) und Führen eines zweiten Elektrolyten (11) als Anolyt in die zweite Kammer (5), wobei der erste und/oder zweite Elektrolyt (10, 11) ein Reduktions-Oxidations-Paar umfasst, **dadurch gekennzeichnet, dass**
- die Oxidationszahl des Reduktions-Oxidations-Paares durch Zugabe einer ersten Komponente zum ersten und/oder zweiten Elektrolyt (10, 11) verändert wird und/oder dass die Oxidationszahl elektrochemisch verändert wird.

2. Verfahren nach einem der vorhergehenden Ansprüche, wobei der erste Elektrolyt (10) ein erstes Reduktions-Oxidations-Paar und der zweite Elektrolyt ein zweites Reduktions-Oxidations-Paar umfasst.

3. Verfahren nach Anspruch 2, wobei als das erste und/oder das zweite Reduktions-Oxidations-Paar ein Polyoxometallat verwendet wird.

4. Verfahren nach Anspruch 2 oder 3, wobei die Oxidationszahl des ersten und/oder zweiten Reduktions-Oxidations-Paares verringert wird.

5. Verfahren nach Anspruch 4, wobei als erste Komponente Hydrazin, ein Alkalimetall, ein Hydrid, ein Aldehyd, Natriumsulfit, Natriumdithionit oder Natriumthiosulfat verwendet werden.

6. Verfahren nach Anspruch 1 oder 2, wobei die Oxidationszahl des ersten und/oder zweiten Reduktions-Oxidations-Paares vergrößert wird.

7. Verfahren nach Anspruch 6, wobei als Oxidationsmittel Wasserstoffperoxid, Permanganat, Sauerstoff, Halogene oder Edelmetallionen verwendet werden.

8. Verfahren nach einem der vorhergehenden Ansprüche, wobei die Zugabe der ersten Komponente im entladenen Zustand der Redox-Flow-Batterie (1) erfolgt.

9. Verfahren nach einem der vorhergehenden Ansprüche, wobei die Restkapazität der Redox-Flow-Batterie (1) gemessen wird und eine erste Menge der ersten Komponente in Relation zu der gemessenen Restkapazität hinzugegeben wird.

10. Verfahren nach einem der vorhergehenden Ansprüche, wobei die elektrochemisch bewirkte Veränderung der Oxidationszahl des Reduktions-Oxidations-Paares mittels einer ersten Aktivierungselektrode (17) in der ersten Kammer (4) und/oder mittels einer zweiten Aktivierungselektrode (18) in der zweiten Kammer (5) erfolgt.

11. Verfahren nach Anspruch 10, wobei die elektrochemisch bewirkte Veränderung der Oxidationszahl des Reduktions-Oxidations-Paares mittels Katalysatoren an der ersten und/oder zweiten Aktivierungselektrode (17, 18) erfolgt.

12. Verfahren nach einem der Ansprüche 10 oder 11, wobei die elektrochemisch bewirkte Veränderung der Oxidationszahl des Reduktions-Oxidations-Paares mittels Additiven an der ersten und/oder zweiten Aktivierungselektrode (17, 18) erfolgt.

13. Verfahren nach einem der Ansprüche 10 bis 12, wobei die erste und/oder zweite Aktivierungselektrode (17, 18) mit einer Spannung in Abhängigkeit der Restkapazität der Redox-Flow-Batterie beaufschlagt werden.

14. Elektrisch wiederaufladbare Redox-Flow-Batterie (1) zum Durchführen des Verfahrens nach einem der Ansprüche 1 bis 13 umfassend:
- eine erste und zweite Kammer (4, 5), getrennt durch eine Membran (3), wobei die erste Kammer (4) eine Kathode (15) und die zweite Kammer (5) eine Anode (16) umfasst, und die erste Kammer (4) geeignet ist einen ersten Elektrolyten (10) als Katholyt aufzunehmen und die zweite Kammer (5) geeignet ist einen zweiten Elektrolyten (11) als Anolyt aufzunehmen, wobei der erste und/oder der zweite Elektrolyt ein Reduktions-Oxidations-Paar umfasst,
- eine erste Pumpe (8) zum Pumpen des Katholyts durch die erste Kammer (4),
- eine zweite Pumpe (9) zum Pumpen des Anolyts durch die zweite Kammer (5),
- eine Zuführvorrichtung (13, 14) geeignet zum Zuführen einer ersten Komponente in die erste und/oder zweite Kammer (4, 5).

15. Redox-Flow-Batterie (1) nach Anspruch 14, wobei die erste Kammer (4) eine erste Aktivierungselektrode (17) umfasst und die zweite Kammer (5) eine zweite Aktivierungselektrode (18) umfasst und die erste und zweite Aktivierungselektroden (17, 18) geeignet sind, eine elektrochemische Veränderung des Reduktions-Oxidations-Paares zu bewirken.
